# EUROPEAN PATENT APPLICATION

(11) **EP 3 308 890 A1**
(43) Date of publication of application: **18.04.2018**
(21) Application number: 16905686.8
(22) Date of filing: 03.08.2016
(51) Int. Cl.: B23C 5/10, B22F 3/105, B22F 3/16, B22F 3/24, B23C 3/00, B33Y 30/00

(54) **CUTTING TOOL AND APPARATUS FOR PRODUCING THREE-DIMENSIONAL ADDITIVE MANUFACTURING PRODUCT**

(71) Applicant: OPM Laboratory Co., Ltd., Kyoto-shi, Kyoto 600-8815 (JP)
(72) Inventor: MORIMOTO, Kazuho, Kyoto-shi Kyoto 600-8815 (JP); HIROTA, Atsushi, Kyoto-shi Kyoto 600-8815 (JP); ISHIGURO, Hirofumi, Kyoto-shi Kyoto 600-8815 (JP)
(74) Representative: Thibon, Laurent
(86) International application number: PCT/JP2016/072801
(87) International publication number: WO 2018/025349

(57) **Abstract**

Provided are a cutting tool capable of suppressing damage, and a manufacturing device for a three-dimensional layered formative object.

In manufacturing a three-dimensional layered formative object by forming solidified layers obtained by irradiating material powder with energy beam to solidify the material powder, laminating the solidified layers and performing a cutting process on the laminated solidified layers, a cutting tool used in a process of scraping off a finishing allowance from the solidified layers cut with the finishing allowance left comprises: a columnar part; a cutting part connected to an end of the columnar part, having a maximum radius centered on a central axis of the columnar part larger than a maximum radius of the columnar part, and having a blade for cutting; and a diameter enlargement part located at a boundary between the columnar part and the cutting part, and having a radius continuously enlarged from the columnar part toward the cutting part. The maximum radius of the diameter enlargement part is smaller than the maximum radius of the cutting part.

## Description

### [Technical Field]

The present invention relates to a cutting tool and manufacturing device for manufacturing a three-dimensional layered formative object by laminating solidified layers in which material powder is solidified.

### [Background Art]

A known method of manufacturing a three-dimensional layered formative object includes irradiating material powder such as metal powder with energy beam such as laser light, forming solidified layers by sintering or melting and solidifying the material powder, forming a three-dimensional shape by laminating the solidified layers, and applying a cutting process in the course of forming the three-dimensional shape. Hereinafter, the manufacturing method will be referred to as a hybrid stereolithography process.

In the hybrid stereolithography process, a cutting process is performed each time some of the solidified layers is laminated. If, however, a new solidified layer is formed and laminated over a solidified layer that had been subjected to a cutting process, the already-cut solidified layer may be deformed due to the effect of heat from the new solidified layer. This causes a problem of irregularities occurring on a surface of a three-dimensional layered formative object. In the conventional hybrid stereolithography process, a finishing allowance is left to form a shape slightly larger than a desired shape at the time of the cutting process, and a finishing process is carried out on a somewhat lower solidified layer that is not susceptible to heat from a new solidified layer, to obtain a desired shape. This can suppress the occurrence of irregularities on the surface of the three-dimensional layered formative object. Patent Document 1 describes an example of the conventional hybrid stereolithography process.

### [Prior Art Document]

### [Patent Document]

[Patent Document 1] Japanese Patent Application Laid-Open Publication No. 2007-204828

### [Summary of Invention]

### [Problems to be Solved by Invention]

In the hybrid stereolithography process, a formative object during manufacturing is buried in the material powder, so that the cutting machine for a cutting process is disposed above the object. In the finishing process, a finishing allowance for a lower solidified layer needs to be cut while a finishing allowance for an upper solidified layer is left. Thus, the cutting tool for the finishing process has such a shape that the lower end of a columnar part is connected to a cutting part having a shape protruding laterally compared to the side surface of the columnar part. During the finishing process, such a problem arises that a load tends to be applied to the cutting part which is in contact with the formative object, easily damaging the tool. For example, damage occurs at the boundary between the columnar part and the cutting part. If the tool is damaged, it is troublesome to change the tool and the manufacturing cost for a three-dimensional layered formative object is increased.

The present invention has been made in view of the above circumstances, and aims to provide a cutting tool and manufacturing device that can suppress damage for manufacturing a three-dimensional layered formative object.

### [Means for Solving Problems]

A cutting tool according to the present invention used in manufacturing a three-dimensional layered formative object by forming solidified layers obtained by irradiating material powder with energy beam to solidify the material powder, laminating the solidified layers and performing a cutting process on the laminated solidified layers, the cutting tool being used in a process of scraping off a finishing allowance from the solidified layers cut with the finishing allowance left, comprises: a columnar part; a cutting part connected to an end of the columnar part, having a maximum radius centered on a central axis of the columnar part larger than a maximum radius of the columnar part, and having a blade for cutting; and a diameter enlargement part located at a boundary between the columnar part and the cutting part, and having a radius continuously enlarged from the columnar part toward the cutting part. A maximum radius of the diameter enlargement part is smaller than the maximum radius of the cutting part.

In the cutting tool according to the present invention, out of a cross section of the diameter enlargement part including the central axis of the columnar part, a cross-sectional area of a portion distant from the central axis by a length equal to or larger than a value obtained by subtracting a value of a thickness of the finishing allowance to be scraped off from a maximum radius of the cutting part is smaller than one sixteenth compared to a case where the maximum radius of the diameter enlargement part corresponds to the maximum radius of the cutting part.

In the cutting tool according to the present invention, a value obtained by subtracting the maximum radius of the diameter enlargement part from the maximum radius of the cutting part is larger than a value of a thickness of the finishing allowance to be scraped off.

In the cutting tool according to the present invention, the value obtained by subtracting the maximum radius of the diameter enlargement part from the maximum radius of the cutting part is larger than 0.025mm.

In the cutting tool according to the present invention, a value obtained by subtracting the maximum radius of the diameter enlargement part from the maximum radius of the cutting part is larger than 0.035mm.

A manufacturing device according to the present invention for manufacturing a three-dimensional layered formative object by forming solidified layers obtained by irradiating material powder with energy beam to solidify the material powder, laminating the solidified layers and performing a cutting process on the laminated solidified layers, comprises the cutting tool according to the present invention.

According to an aspect of the present invention, a manufacturing device for manufacturing a three-dimensional layered formative object by the hybrid stereolithography process comprises a cutting tool to be used in a finishing process that scrapes off a finishing allowance left in solidified layers. The cutting tool comprises a columnar part and a cutting part connected to an end of the columnar part. The cutting part has a maximum radius larger than that of the columnar part. At the boundary between the columnar part and the cutting part, a diameter enlargement part is provided which has a radius continuously enlarged from the columnar part toward the cutting part. The maximum radius of the diameter enlargement part is smaller than the maximum radius of the cutting part. The portion of the diameter enlargement part that interferes with a finishing allowance during a finishing process is smaller than the conventional case. This reduces the load applied to the cutting tool during the process.

According to another aspect of the present invention, out of the cross section of the diameter enlargement part including the central axis of the columnar part, the cross-sectional area of a portion distant from the central axis by a length equal to or larger than a value obtained by subtracting the value of the thickness of the finishing allowance from the maximum radius of the cutting part is smaller than one sixteenth the cross-sectional area in the conventional cutting tool in which the maximum radius of the diameter enlargement part corresponds to the maximum radius of the cutting part. The size of a portion where the diameter enlargement part interferes with the finishing allowance during the process is sufficiently reduced, which reduces the load applied to the cutting tool.

According to a further aspect of the present invention, a value obtained by subtracting the maximum radius of the cutting part from the maximum radius of the diameter enlargement part is larger than the thickness of the finishing allowance. This prevents the diameter enlargement part from interfering with the finishing allowance during the process, and further reduces a load applied to the cutting tool.

According to another aspect of the present invention, a value obtained by subtracting the maximum radius of the diameter enlargement part from the maximum radius of the cutting part is larger than 0.025mm. Under this condition, in the case where the difference between the maximum radius of the columnar part and the maximum radius of the cutting part is 0.05mm, and the thickness of the finishing allowance is 0.035mm, the cross-sectional area of a portion interfering with the finishing allowance during the process is smaller than one sixteenth the cross-sectional area in the case of the conventional cutting tool. Accordingly, a load applied to the cutting tool during the process is reduced.

According to another aspect of the present invention, a value obtained by subtracting the maximum radius of a diameter enlargement part from the maximum radius of the cutting part is larger than 0.035mm. Under this condition, in the case where the thickness of the finishing allowance is 0.035mm, the diameter enlargement part does not interfere with the finishing allowance during the process. Accordingly, the load applied to the cutting tool during the process is reduced.

### [Effect of the Invention]

According to the present invention, a load applied to the cutting tool during a process is reduced, which suppresses damage to the cutting tool. Therefore, the present invention produces beneficial effects of, for example, reducing the trouble of changing the cutting tool and suppressing the manufacturing cost for the three-dimensional layered formative object.

### [Brief Description of Drawings]

FIG. 1 is a schematic partial section view illustrating the configuration of a manufacturing device for a three-dimensional layered formative object;
FIG. 2 is a schematic partial section view illustrating a procedure of a hybrid stereolithography process;
FIG. 3 is a schematic partial section view illustrating a procedure of a hybrid stereolithography process;
FIG. 4 is a schematic partial section view illustrating a procedure of a hybrid stereolithography process;
FIG. 5 is a schematic partial section view illustrating a procedure of a hybrid stereolithography process;
FIG. 6 is a schematic section view illustrating the state of multiple formative layers before subjected to a cutting process;
FIG. 7 is a schematic section view illustrating a process of cutting a formative layer while leaving a finishing allowance;
FIG. 8 is a schematic section view illustrating a finishing process;
FIG. 9 is a schematic front view illustrating a first cutting tool according to an embodiment of the present invention;
FIG. 10 is a partial front view schematically illustrating the conventional first cutting tool;
FIG. 11 is a schematic section view in which a portion where the first cutting tool is in contact with a formative layer during a finishing process is enlarged;
FIG. 12 is a schematic view illustrating the cross section of a diameter enlargement part interfering with a finishing allowance; and
FIG. 13 is a table summarizing the relationship between the shape and durability of the first cutting tool.

### [Mode for Carrying Out Invention]

The present invention will specifically be described below with reference to the drawings illustrating the embodiments thereof.

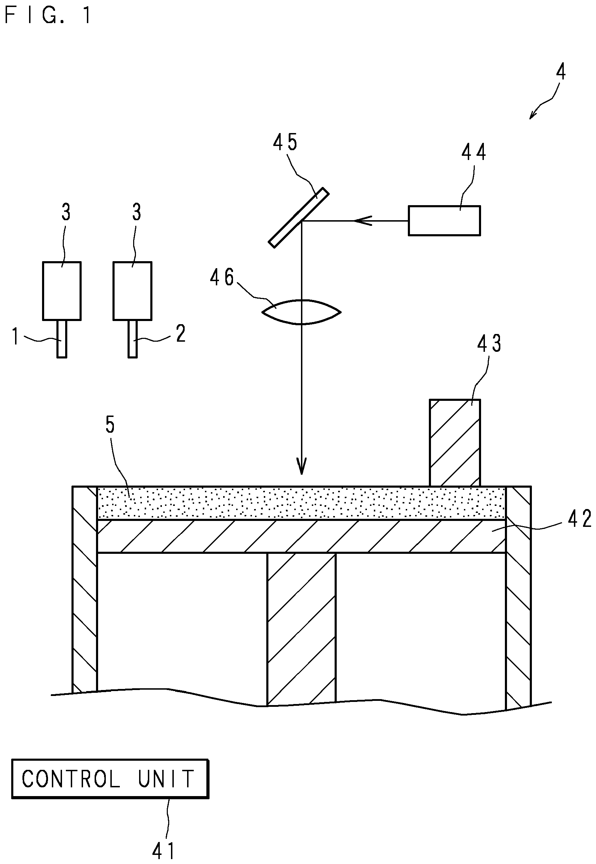

FIG. 1 is a schematic partial section view illustrating the configuration of a manufacturing device 4 for a three-dimensional layered formative object. The manufacturing device 4 performs a hybrid stereolithography process in which metal powder (material powder) is irradiated with laser light (energy beam), the metal powder is sintered to form solidified layers, the solidified layers are laminated to form a three-dimensional shape, and a cutting process is applied in the course of forming the three-dimensional shape. The manufacturing device 4 comprises a lifting table 42 which is movable upward and downward while holding a formative object, a blade 43 which applies metal powder 5 onto the lifting table 42, a laser light source 44 for irradiating the metal powder 5 on the lifting table 42 with laser light, and a cutting machine 3 performing a cutting process on the formative object. The laser light source 44 employs a laser that can effectively heat the metal powder 5, such as a fiber laser. The manufacturing device 4 further includes a mirror 45 which reflects laser light and a lens 46 which collects the laser light. The mirror 45 is moved to adjust the position where the metal powder 5 is irradiated with laser light. In FIG. 1, laser light is indicated by arrows. The manufacturing device 4 may also include, in addition to the mirror 45 and lens 46, an optical system for adjusting the irradiated position of laser light. The cutting machine 3 has a first cutting tool 1 for performing a finishing process, and a second cutting tool 2 for performing a cutting process while leaving a finishing allowance. The cutting tool according to the present invention is the first cutting tool 1.

Furthermore, the manufacturing device 4 comprises a control unit 41 controlling the operation of the entire manufacturing device 4. The control unit 41 is configured to include an operation unit performing arithmetic operation for controlling movement, a memory storing information associated with the arithmetic operation, a storage unit storing a control program, and so forth. The control unit 41 controls the movement of each portion constituting the manufacturing device 4, and controls the position of the laser light directed to the metal powder 5 and the cut position of the formative object to be cut by the cutting machine 3.

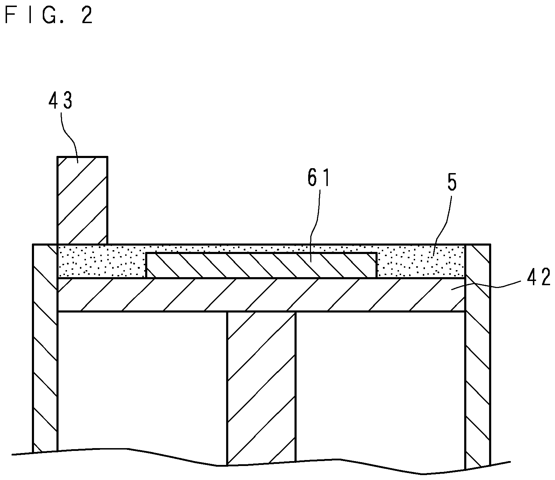

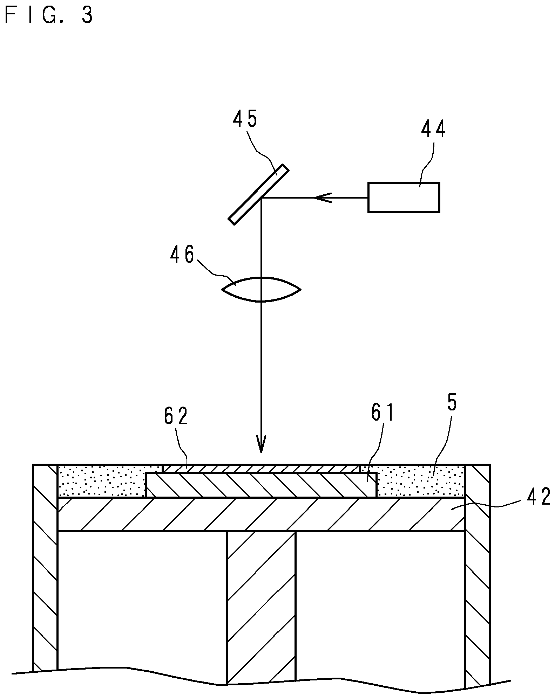

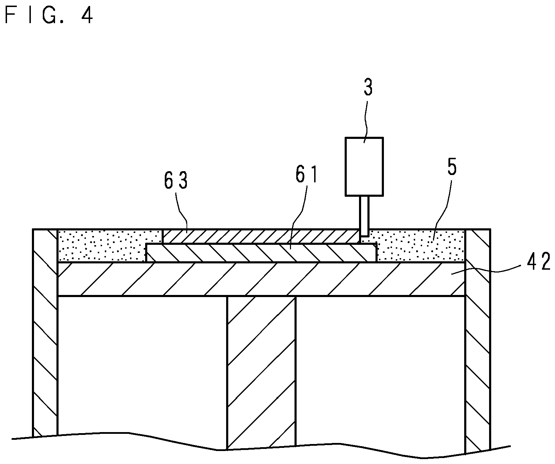

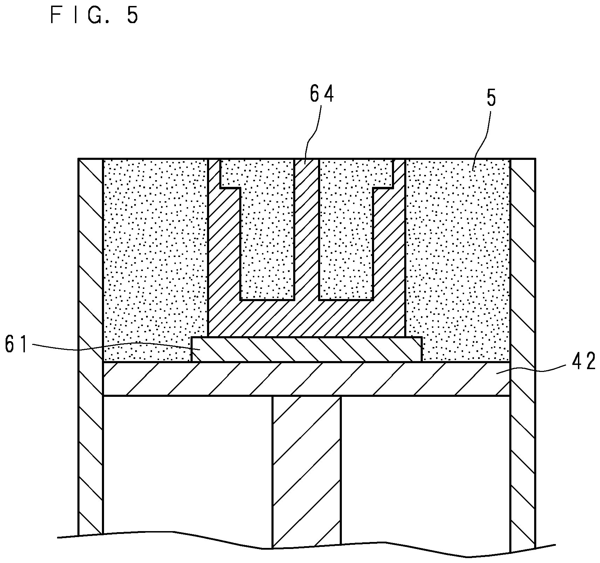

The hybrid stereolithography process is now summarized. FIGS. 2 to 5 are schematic partial section views illustrating the procedure of the hybrid stereolithography process. As illustrated in FIG. 2, a base plate 61 is placed on the lifting table 42, and the metal powder 5 is applied to the base plate 61 by the blade 43. Subsequently, as illustrated in FIG. 3, the metal powder 5 is irradiated with laser light, heated and sintered, to form a solidified layer 62. Scanning is performed with the laser light in the shape of the cross section of the formative object, and the solidified layer 62 having the cross-sectional shape of the formative object is formed. Subsequently, the lifting table 42 is slightly lowered, and the metal powder 5 is applied to the solidified layer 62 by the blade 43, is irradiated with laser light and is sintered, so that the next solidified layer 62 is formed. The application of the metal powder 5, irradiation with laser light and sintering of the metal powder 5 are repeated, to laminate multiple solidified layers 62. At the stage where a predetermined number of solidified layers 62 are laminated, a cutting process is performed by the cutting machine 3 on a formative layer 63 obtained by the lamination of multiple solidified layers 62, as illustrated in FIG. 4. The cutting process allows the formative layer 63 to be processed into a desired shape serving as a part of the formative object. The formation and lamination of the formative layer 63, as well as the cutting process on the formative layer 63 are repeated, to manufacture the three-dimensional layered formative object 64 in which multiple formative layers 63 are laminated.

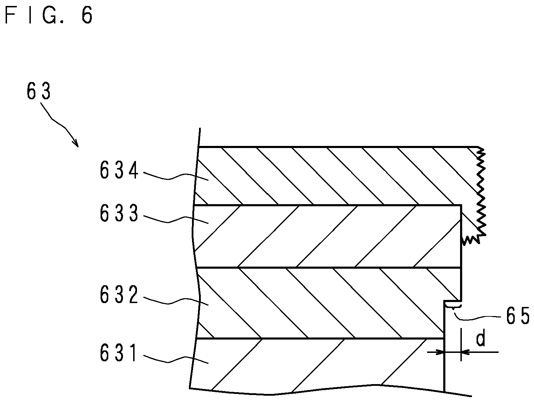

The cutting process is now summarized. FIG. 6 is a schematic section view illustrating the state where a new formative layer 63 is laminated on multiple formative layers 63. Here, the laminated formative layers 63 include a first formative layer 631, a second formative layer 632, a third formative layer 633 and a fourth formative layer 634. The multiple laminated formative layers 63 include, from the bottom, the first formative layer 631, the second formative layer 632, the third formative layer 633 and the fourth formative layer 634. Below the first formative layer 631, other formative layers 63 are laminated. The first formative layer 631 is in the state of being finished into a desired shape for constituting a part of a formative object. A portion of the second formative layer 632 is finished into a desired shape, while a cutting process is performed on the other portion with a finishing allowance 65 left, which protrudes more outward compared to the desired shape. The finished portion is located below the portion with the finishing allowance 65 left. The third formative layer 633 is in the state of being subjected to a cutting process with the finishing allowance 65 left. The fourth formative layer 634 is newly formed by laminating the multiple solidified layers 62, and is not yet subjected to the cutting process. The cutting process is performed in two stages including a process of cutting the formative layer 63 while leaving the finishing allowance 65 and a finishing process of scraping off the finishing allowance 65 to finish the formative layer 63 into a desired shape.

In the case of newly laminating the solidified layer 62 on the formative layer 63, heat for forming the solidified layer 62 is transmitted to the formative layer 63, which deforms the formative layer 63. For example, the portion to which heat is transmitted contracts. In order to cancel out the deformation of the formative layer 63, the finishing allowance 65 is formed at an upper formative layer 63 to which heat is easily transmitted. A thickness d corresponding to the finishing allowance 65 protruding outward from the desired shape of the formative layer 63 is just large enough to cancel out the deformation of the formative layer 63. If the thickness d of the finishing allowance 65 is too small, the deformation of the formative layer 63 cannot be canceled out, causing irregularities on the surface of the three-dimensional layered formative object 64. If the thickness d of the finishing allowance 65 is too large, a load applied on the first cutting tool 1 for the finishing process is increased. The thickness d of the finishing allowance 65 to be scraped off by the finishing process is, for example, 0.035mm.

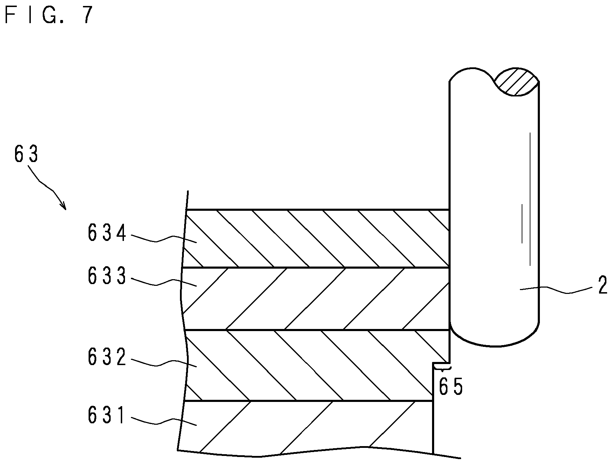

FIG. 7 is a schematic section view illustrating a process of cutting the formative layer 63 while leaving the finishing allowance 65. The cutting machine 3 performs the process with the use of the second cutting tool 2. The second cutting tool 2 is a substantially-columnar end mill. Though not illustrated in FIG. 7, the second cutting tool 2 has a blade for cutting on its side surface while a groove is formed thereat. The second cutting tool 2 rotates about its central axis to cut an object that touches its side surface. The cutting machine 3 rotates the second cutting tool 2 and cuts the formative layer 63 while the side surface of the second cutting tool 2 makes contact with the side surface of the formative layer 63. Here, as illustrated in FIG. 7, a process of leaving the finishing allowance 65 is performed for the second formative layer 632, the third formative layer 633 and the fourth formative layer 634.

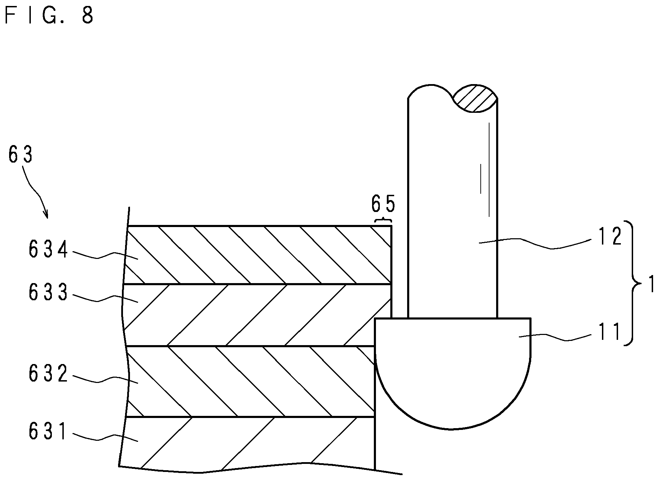

FIG. 8 is a schematic section view illustrating the finishing process. The cutting machine 3 uses the first cutting tool 1 to perform the process. As illustrated in FIG. 8, the cutting machine 3 scrapes off the finishing allowance 65 at the second formative layer 632, and finishes the second formative layer 632 into a desired shape. Moreover, the cutting machine 3 scrapes off a part of the finishing allowance 65 at the third formative layer 633, and finishes a part of the third formative layer 633 into a desired shape. Meanwhile, the finishing allowance 65 at the other part of the third formative layer 633 and at the fourth formative layer 634 are left. The portion where the finishing allowance 65 is left at the third formative layer 633 is located above the finished portion. In order to perform such a finishing process, the first cutting tool 1 has a shape different from that of the second cutting tool 2. The first cutting tool 1 is so configured that a cutting part 11 having a diameter larger than the columnar part 12 is connected to an end of the columnar part 12 in order to cut the finishing allowance 65 at the lower side while not being in contact with the finishing allowance 65 at the upper side. After completing the finishing process, a solidified layer 62 is further formed, and the next cutting process, if any, starts again from the state illustrated in FIG. 6.

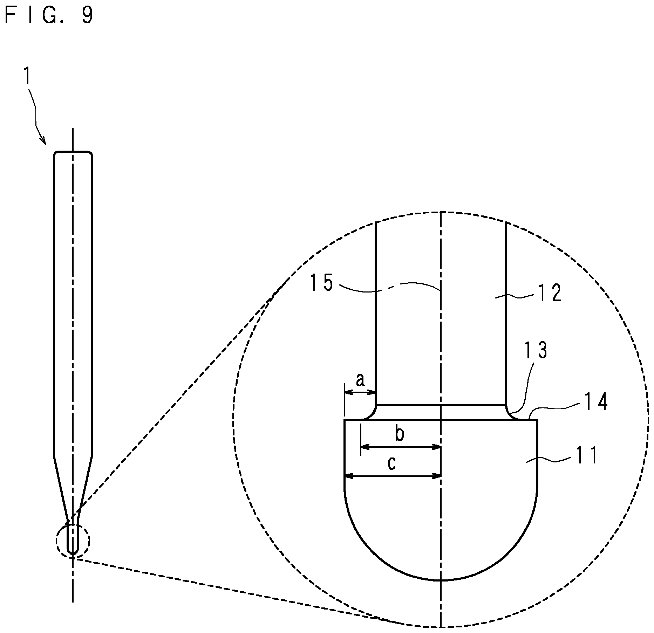

FIG. 9 is a schematic front view illustrating the first cutting tool 1 according to the present embodiment. The first cutting tool 1 is an end mill and has a substantially columnar shape as a whole. FIG. 9 illustrates an enlarged view of a tip end portion of the first cutting tool 1. The first cutting tool 1 includes the columnar part 12 and the cutting part 11 connected to an end of the columnar part 12. Though not illustrated in FIG. 9, the cutting part 11 has a blade for cutting on its side surface, and a groove is formed thereat. The columnar part 12 has no blade for cutting. Moreover, the maximum radius of the cutting part 11 centered on the central axis of the columnar part 12 is larger than the maximum radius of the columnar part 12. Thus, the side surface of the cutting part 11 protrudes more than the side surface of the columnar part 12. A protruding length a by which the side surface of the cutting part 11 protrudes more than the side surface of the columnar part 12, i.e. the value of a difference between the maximum radius c of the cutting part 11 and the radius of the columnar part 12, corresponds to a length larger than the thickness d of the finishing allowance 65. For example, the protruding length a is 0.05mm. The first cutting tool 1 rotates about the central axis 15 of the columnar part 12 with the cutting part 11 on the lower side, to cut an object that touches the side surface of the cutting part 11. The cutting machine 3 rotates the first cutting tool 1 and performs a finishing process while making the side surface of the cutting part 11 in contact with the side surface of the formative layer 63. Since the side surface of the cutting part 11 protrudes more than the side surface of the columnar part 12, a finishing process of scraping off the finishing allowance 65 in the formative layer 63 on the lower side may be performed while leaving the finishing allowance 65 at the formative layer 63 on the upper side.

The first cutting tool 1 includes a diameter enlargement part 13 at the boundary between the columnar part 12 and the cutting part 11. In the diameter enlargement part 13, the radius centered on the central axis 15 is continuously enlarged from the columnar part 12 toward the cutting part 11. As illustrated in FIG. 9, the change ratio in the radius of the diameter enlargement part 13 is increased as it approaches the cutting part 11, and the side surfaces of the diameter enlargement part 13 is curved in a plane including the central axis 15. The diameter enlargement part 13 is provided in order to reduce stress concentration at the boundary between the columnar part 12 and the cutting part 11. The minimum radius of the diameter enlargement part 13 corresponds to the radius of the columnar part 12. In the present embodiment, the maximum radius b of the diameter enlargement part 13 centered on the central axis 15 is smaller than the maximum radius c of the cutting part 11. Thus, the diameter enlargement part 13 does not reach the portion where the radius of the cutting part 11 is maximum. The cutting part 11 has a flat surface part 14 contiguous to the diameter enlargement part 13. The flat surface part 14 is a plane orthogonal to a direction parallel to the central axis 15.

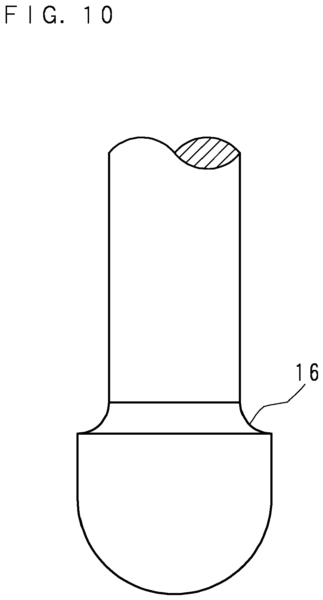

FIG. 10 is a partial front view schematically illustrating the conventional first cutting tool. The conventional first cutting tool also has a columnar part, a cutting part and a diameter enlargement part 16. The maximum radius of the diameter enlargement part 16 substantially corresponds to the maximum radius of the cutting part. The diameter enlargement part 16 reaches the portion where the radius of the cutting part is maximum. The shape of the diameter enlargement part 16 has a shape that reduces the stress concentration at the boundary between the columnar part and the cutting part as much as possible. The conventional first cutting tool, however, has such a problem that it is easily damaged during a finishing process.

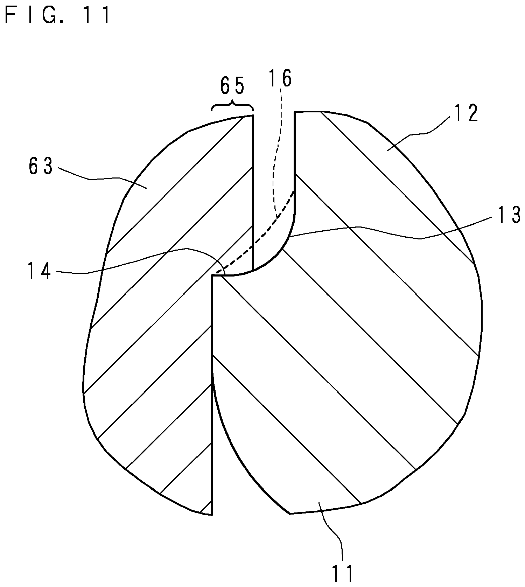

The reason for the conventional first cutting tool being easily damaged will now be described. FIG. 11 is a schematic section view in which a portion where the first cutting tool 1 makes contact with the formative layer 63 during a finishing process is enlarged. In FIG. 11, the diameter enlargement part 16 of the conventional first cutting tool is indicated by a broken line. During the finishing process, the first cutting tool rotates and the side surface of the cutting part cuts the formative layer 63 so as to scrape off the finishing allowance 65. Here, the diameter enlargement part 16 interferes with the finishing allowance 65 while rotating. Since no blade is formed at the diameter enlargement part 16, the diameter enlargement part 16 receives a resistive force from the finishing allowance 65. Thus, a load is applied to the first cutting tool, which easily cause damage. For example, such a damage occurs that a portion of the cutting part that protrudes from the columnar part comes off.

In the first cutting tool 1 according to the present embodiment, on the other hand, the maximum radius of the diameter enlargement part 13 is smaller than the maximum radius of the cutting part 11, which reduces the size of the portion of the diameter enlargement part 13 that interferes with the finishing allowance 65, as illustrated in FIG. 11. Accordingly, the diameter enlargement part 13 receives a small resistive force from the finishing allowance 65. Since the flat surface part 14 is a plane orthogonal to the central axis 15 which is the center of rotation, it hardly interferes with the finishing allowance 65 and thus receives a small resistive force from the finishing allowance 65. As such, the resistive force received by the first cutting tool 1 from the finishing allowance 65 is reduced compared to that in the conventional first cutting tool. This reduces the load applied to the first cutting tool 1 and suppresses damage to the first cutting tool 1.

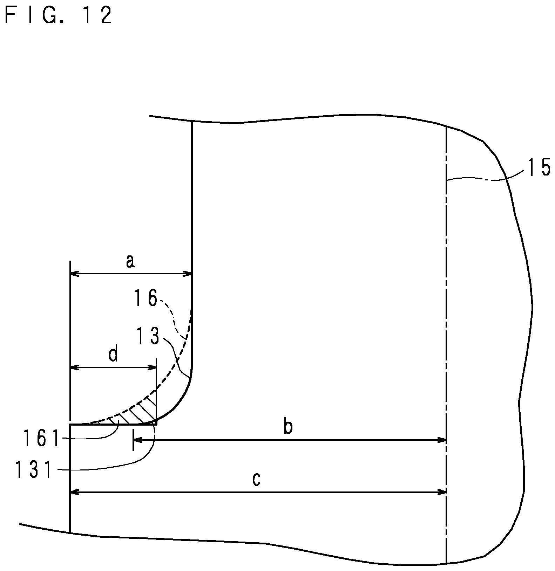

FIG. 12 is a schematic view illustrating the cross section of a diameter enlargement part interfering with the finishing allowance 65. Out of the cross section of the diameter enlargement part including the central axis 15, the cross-sectional area of a portion of the diameter enlargement part interfering with the finishing allowance 65 corresponds to the area of a portion that is distant from the central axis 15 by a length larger than a value obtained by subtracting the value d of the thickness of the finishing allowance 65 from the maximum radius c of the cutting part. The resistive force received from the finishing allowance 65 is reduced as a cross section 131 of a portion of the diameter enlargement part 13 interfering with the finishing allowance 65 in the first cutting tool 1 is made smaller compared to a cross section 161 of a portion of the diameter enlargement part 16 interfering with the finishing allowance 65 in the conventional first cutting tool, thereby reducing the load applied to the first cutting tool 1. That is, the smaller the area of the cross section 131 is compared to the area of the cross section 161, the more the durability of the first cutting tool 1 is increased, suppressing damage to the first cutting tool 1.

The first cutting tool 1 was prepared for trial and a test was conducted for its durability, to find that the durability of the first cutting tool 1 is greatly enhanced compared to the conventional first cutting tool in the case where the area of the cross section 131 is smaller than one sixteenth the area of the cross section 161. That is, in the first cutting tool 1 according to the present embodiment, out of the cross section of the diameter enlargement part 13 including the central axis 15, the cross-sectional area of the portion distant from the central axis 15 by the length larger than a value obtained by subtracting the value d of the thickness of the finishing allowance 65 from the maximum radius c of the cutting part 11 is preferably smaller than one sixteenth compared to the case where the maximum radius of the diameter enlargement part corresponds to the maximum radius of the cutting part. The durability of the first cutting tool 1 is enhanced and damage to the first cutting tool 1 is suppressed. In the case where the protruding length a by which the side surface of the cutting part 11 protrudes more than the side surface of the columnar part 12 (difference between the maximum radius c of the cutting part 11 and the radius of the columnar part 12) is 0.05mm and the thickness of the finishing allowance 65 is 0.035mm, a value (c-b) obtained by subtracting the maximum radius b of the diameter enlargement part 13 from the maximum radius c of the cutting part 11 is larger than 0.025mm, the conditions are satisfied and the durability of the first cutting tool 1 is enhanced.

Furthermore, if the area of the cross section 131 of a portion of the diameter enlargement part 13 interfering with the finishing allowance 65 is zero as illustrated in FIG. 12, the load applied to the first cutting tool 1 is theoretically minimized. If the value (c-b) obtained by subtracting the maximum radius b of the diameter enlargement part 13 from the maximum radius c of the cutting part 11 is larger than the thickness d of the finishing allowance 65, the area of the cross section 131 is zero. That is, in the first cutting tool 1 according to the present embodiment, the value (c-b) obtained by subtracting the maximum radius b of the diameter enlargement part 13 from the maximum radius c of the cutting part 11 is preferably larger than the thickness d of the finishing allowance 65. If the thickness of the finishing allowance 65 is 0.035mm, c-b may take a value larger than 0.035mm. The durability of the first cutting tool 1 is more enhanced, and damage to the first cutting tool 1 is more suppressed. It is noted that the value obtained by subtracting the radius of the columnar part 12 from the maximum radius b of the diameter enlargement part 13 is required to be larger than zero.

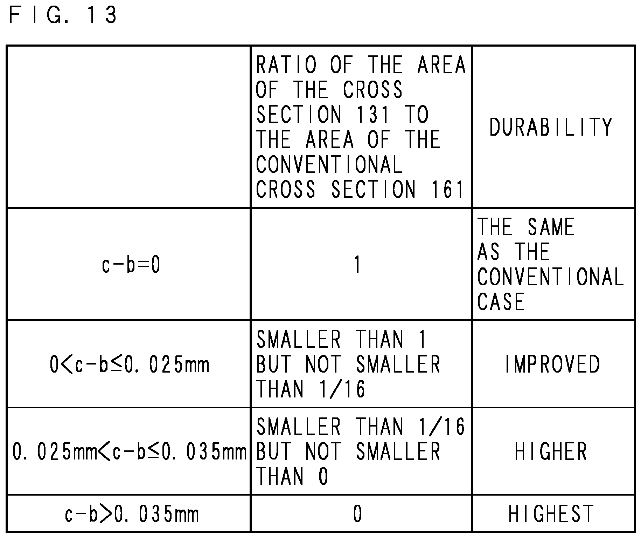

FIG. 13 is a table showing the relationship between the shape and durability of the first cutting tool 1. The first cutting tool in which the maximum radius c of the cutting part 11 corresponds to the maximum radius b of the diameter enlargement part 13 and c-b=0 is the conventional first cutting tool. The ratio of the cross-sectional area of the portion interfering with the finishing allowance 65 of the diameter enlargement part to that in the conventional case is one, and the durability is the same as that in the conventional case. The ratio of the area of the cross section 131 of the portion of the diameter enlargement part 13 interfering with the finishing allowance 65 to the area of the conventional cross section 161 is smaller than one but not smaller than one sixteenth, the durability of the first cutting tool 1 is improved compared to the conventional case. In this case, if the protruding length a by which the side surface of the cutting part 11 protrudes more than the side surface of the columnar part 12 is 0.05mm and the thickness d of the finishing allowance to be scraped off is 0.035mm, the value (c-b) obtained by subtracting the maximum radius b of the diameter enlargement part 13 from the maximum radius c of the cutting part 11 is more than zero but not more than 0.025mm.

If the ratio of the area of the cross section 131 of the portion of the diameter enlargement part 13 interfering with the finishing allowance 65 to the area of the conventional cross section 161 is smaller than one sixteenth, the first cutting tool 1 has higher durability. In this case, if the protruding length a of the cutting part 11 is 0.05mm and the thickness d of the finishing allowance d is 0.035mm, the value (c-b) obtained by subtracting the maximum radius b of the diameter enlargement part 13 from the maximum radius c of the cutting part 11 is more than 0.025mm but not more than 0.035mm. In the case where the area of the cross section 131 of the portion of the diameter enlargement part 13 interfering with the finishing allowance 65 is zero, the first cutting tool 1 has the highest durability. In this case, if the radio of the area of the cross section 131 to the area of the conventional cross section 161 is zero and the thickness d of the finishing allowance is 0.035mm, the value (c-b) obtained by subtracting the maximum radius b of the diameter enlargement part 13 from the maximum radius c of the cutting part 11 is more than 0.035mm. Furthermore, the diameter enlargement part 13 needs to exist, c-b is smaller than the protruding length a of the cutting part 11.

An example is described where the durability of the first cutting tool 1 according to the present embodiment was tested. As the first cutting tool 1 according to the present embodiment, the first cutting tool 1 was prepared in which the protruding length a of the cutting part 11 is 0.05mm and the value (c-b) obtained by subtracting the maximum radius b of the diameter enlargement part 13 from the maximum radius c of the cutting part 11 is 0.03mm. For comparison, the conventional first cutting tool was used in which the protruding length a of the cutting part 11 is 0.05mm and the maximum radius b of the diameter enlargement part 16 corresponds to the maximum radius c of the cutting part. In a finishing process performed in manufacturing a three-dimensional layered formative object having the same shape, the case of using the first cutting tool 1 according to the present embodiment was compared with the case of using the conventional first cutting tool. In either case, the thickness d of the finishing allowance 65 was 0.035mm and the total time required for the finishing process until the three-dimensional layered formative object is completed was seven hours.

In the case of using the conventional first cutting tool, the first cutting tool was damaged after four and a half hours, and was damaged again after two hours from a change of the first cutting tool for continuing the process. Eventually, three first cutting tools were used to complete the three-dimensional layered formative object. In the case of using the first cutting tool 1 according to the present embodiment, no damage occurred in the first cutting tool 1 and the three-dimensional layered formative object was completed with one first cutting tool 1 alone. In this example, the endurance time for the conventional first cutting tool is four and a half hours at maximum, while the endurance time for the first cutting tool 1 according to the present embodiment is seven hours or longer. That is, the first cutting tool 1 according to the present embodiment has 1.5 times durable compared to the conventional case, not easily causing damage. In the manufacturing device 4 for the three-dimensional layered formative object according to the present embodiment, therefore, damage to the first cutting tool 1 is suppressed. The suppression of damage to the cutting tool reduces the trouble of changing the cutting tool and also suppresses the manufacturing cost for the three-dimensional layered formative object.

Though a mode where a solidified layer is formed by sintering metal powder has been described in the present embodiment, the manufacturing device 4 for a three-dimensional layered formative object may also employ a mode where a solidified layer is formed by melting and solidifying metal powder. While a mode where laser light is used as energy beam has been described in the present embodiment, the manufacturing device 4 for a three-dimensional layered formative object may also employ a mode where energy beam other than laser light is used. Moreover, while a mode where metal powder is used as material powder has been described in the present embodiment, the manufacturing device 4 for a three-dimensional layered formative object may also employ a mode where material powder other than metal powder, such as resin powder, is used as the material powder. Furthermore, though the protruding length a of the cutting part 11 is set as 0.05mm and the thickness d of the finishing allowance 65 is set as 0.035mm in the present embodiment, this is a mere example and other numerical values may also be employed to configure the manufacturing device 4 for a three-dimensional layered formative object.

### [Description of Reference Numerals]

1 first cutting tool (cutting tool)
11 cutting part
12 columnar part
13 diameter enlargement part
15 central axis
2 second cutting tool
3 cutting machine
4 manufacturing device
5 metal powder (material powder)
62 solidified layer
63 formative layer
64 three-dimensional layered formative object
65 finishing allowance

## Claims

1. A cutting tool used in manufacturing a three-dimensional layered formative object by forming solidified layers obtained by irradiating material powder with energy beam to solidify the material powder, laminating the solidified layers and performing a cutting process on the laminated solidified layers, the cutting tool being used in a process of scraping off a finishing allowance from the solidified layers cut with the finishing allowance left, comprising:
a columnar part;
a cutting part connected to an end of the columnar part, having a maximum radius centered on a central axis of the columnar part larger than a maximum radius of the columnar part, and having a blade for cutting; and
a diameter enlargement part located at a boundary between the columnar part and the cutting part, and having a radius continuously enlarged from the columnar part toward the cutting part,
wherein a maximum radius of the diameter enlargement part is smaller than the maximum radius of the cutting part.

2. The cutting tool according to claim 1, wherein
out of a cross section of the diameter enlargement part including the central axis of the columnar part, a cross-sectional area of a portion distant from the central axis by a length equal to or larger than a value obtained by subtracting a value of a thickness of the finishing allowance to be scraped off from a maximum radius of the cutting part is smaller than one sixteenth compared to a case where the maximum radius of the diameter enlargement part corresponds to the maximum radius of the cutting part.

3. The cutting tool according to claim 1, wherein
a value obtained by subtracting the maximum radius of the diameter enlargement part from the maximum radius of the cutting part is larger than a value of a thickness of the finishing allowance to be scraped off.

4. The cutting tool according to claim 1, wherein
the value obtained by subtracting the maximum radius of the diameter enlargement part from the maximum radius of the cutting part is larger than 0.025mm.

5. The cutting tool according to claim 1, wherein
a value obtained by subtracting the maximum radius of the diameter enlargement part from the maximum radius of the cutting part is larger than 0.035mm.

6. A manufacturing device for manufacturing a three-dimensional layered formative object by forming solidified layers obtained by irradiating material powder with energy beam to solidify the material powder, laminating the solidified layers and performing a cutting process on the laminated solidified layers, comprising
the cutting tool according to claims 1 to 5.
